# EUROPEAN PATENT SPECIFICATION

(11) **EP 4 210 341 B1**
(45) Date of publication and mention of the grant of the patent: **19.02.2025**
(21) Application number: 22207732.3
(22) Date of filing: 16.11.2022
(51) Int. Cl.: H04N 23/90, H04N 23/61, H04N 23/695, H04N 23/661, H04N 23/51, H04N 23/60

(54) **IMAGE CAPTURE SYSTEM, CONTROL DEVICE, AND METHOD THEREFOR**
BILDERFASSUNGSSYSTEM, STEUERUNGSVORRICHTUNG UND VERFAHREN DAFÜR
SYSTÈME DE CAPTURE D'IMAGE, DISPOSITIF DE COMMANDE ET PROCÉDÉ ASSOCIÉ

(30) Priority: 07.01.2022 JP 2022001599
(43) Date of publication of application: 12.07.2023
(73) Proprietor: Toshiba TEC Kabushiki Kaisha, Tokyo 141-8562 (JP)
(72) Inventor: Ariga, Norimasa, Shinagawa-ku, Tokyo, 141-8562 (JP); Yasunaga, Masaaki, Shinagawa-ku, Tokyo, 141-8562 (JP)
(74) Representative: Hoffmann Eitle

(56) References cited:
- US-A1- 2017 032 311
- US-A1- 2019 025 849
- US-A1- 2020 242 541
- US-A1- 2021 211 583

## Description

### FIELD

Embodiments described herein relate generally to an image capture system, a control device for this system, and a method for causing a computer to function as the control device.

### BACKGROUND

For example, a resolution such as capturing an image of a merchandise rack installed in a store by a camera, analyzing the captured image, and thus checking whether information on a shelf label attached to the merchandise rack is correct or not, is employed. For such a resolution, the characters on the shelf label need to be recognized from the captured image and therefore a camera with a high resolution and a narrow image capture range, that is, a so-called narrow-range camera, is preferable. Meanwhile, in the merchandise rack, many kinds of merchandise items are displayed separately on a plurality of shelves, and the width, height and the like of the shelf required for display vary depending on the merchandise item. Therefore, the shelf labels showing the prices of the individual merchandise items are not arranged at an equal interval in vertical and horizontal directions.

In such circumstances, in order to capture an image of a shelf label no matter what position in the merchandise rack the shelf label is attached, a plurality of narrow-range cameras are installed next to each other in the direction of the height of the merchandise rack on a wheeled platform automatically traveling in the direction of the width in front of the merchandise rack. Each narrow-range camera repeatedly captures an image of the merchandise rack in timing with the automatic traveling of the wheeled platform. Constructing such an image capture system enables the acquisition of an image of the merchandise rack in which all the shelf labels attached to the merchandise rack are captured with a high resolution, and the execution of image processing for recognizing the characters on the shelf labels.

US 2019/025849 A1 relates to a robot for use in acquiring high resolution imaging data. The robot is particularly suited to acquire images indoors-for example in a retail or warehouse premises. Acquired images may be analyzed to identify inventory and the like. The robot includes a conveyance for moving the robot along a path. The robot captures, using a line scan camera, a series of images of objects along the path as the robot moves. A controller controls the locomotion of the robot and the acquisition of individual images through the camera. Each individual acquired image of the series of images has at least one vertical line of pixels.

US 2020/242541 A1 relates to an information processing system including at least one image capturer, a moving unit, and a controller. The at least one image capturer included in the information processing sys-tem captures a store shelf. The moving unit included in the information processing system moves the at least one image capturer. The controller included in the information process-ing system controls image capturing by the at least one image capturer and movement of the at least one image capturer by the moving unit at a predetermined timing.

US 2017/032311 A1 relates to a store profile generation system including a mobile base and an image capture assembly mounted on the base. The assembly includes at least one image capture device for acquiring images of product display units in a retail environment. A control unit acquires the images captured by the at least one image capture device at a sequence of locations of the mobile base in the retail environment. The control unit extracts product-related data from the acquired images and generates a store profile indicating locations of products and their associated tags throughout the retail environment, based on the extracted product-related data.

According to a specific embodiment where multi-resolution imaging for barcode detection is performed, the mobile base includes at least two cameras that extend vertically. A first camera is used to acquire large FOV images of low resolution of the shelf face in order to identify local ROIs where shelf price tags are suspected to be present. Given one or more of these ROIs, a second camera is used to acquire high resolution images of the identified ROIs before the mobile base 20 is moved to its next position along the shelf face. The second camera may have PTZ capability.

US 2021/211583 A1 relates to a system for imaging a face of a rack including a camera and lighting array, a positioning system, a computer system and a wheeled platform. The array includes multiple cameras located in a first plane orthogonal to a second plane and each camera has a first field of view in a first axis of the second plane. Collectively, the first fields of view extend from one end of the face to another end of the face. The positioning system is operable to move the array from a starting point to an ending point via multiple intermediate points along an axis in a third plane parallel to the first plane.

### SUMMARY OF THE INVENTION

One of the objects of the present invention is to improve prior art techniques and overcome at least some of the prior art problems as for instance above illustrated.

The object of the invention is achieved by the subject-matter of the independent claims. Advantageous embodiments are defined in the dependent claims. Further examples are provided for facilitating the understanding of the invention.

### DESCRIPTION OF THE DRAWINGS

FIG. 1 is a schematic view showing a schematic configuration of an image capture system according to an embodiment.
FIG. 2 is a plan view showing an example of a situation where the image capture system is applied.
FIG. 3 is a front view showing an example of a merchandise rack.
FIG. 4 is a schematic view showing the data structure of a rack data table.
FIG. 5 is a schematic view showing an image capture range employed when a first camera at a narrow-range image capture point captures an image of the merchandise rack.
FIG. 6 is an explanatory view showing main functions of a processor of a control device.
FIG. 7 is a flowchart showing main procedures of information processing executed by the processor according to a control program.
FIG. 8 is a flowchart showing specific procedures of wide-range image capture processing in FIG. 7.
FIG. 9 is a flowchart showing specific procedures of narrow-range image capture processing in FIG. 7.
FIG. 10 is a schematic view showing an example of a shelf label position image.
FIG. 11 is a schematic view showing an image capture range covered by seven first cameras installed in an image capture device.
FIG. 12 is a schematic view showing the configuration of a timing list.
FIG. 13 shows the shelf label position image and the image capture range of the first camera superimposed on each other.
FIG. 14 shows an example of an image capture flag stored in the timing list.

### DETAILED DESCRIPTION

However, in the related-art image capture system, each camera repeatedly captures an image of the merchandise rack regardless of whether a shelf label is present or not, and therefore even an image that does not include any shelf label is processed. Thus, there are problems to be solved, such as an increase in the capacity of a memory storing image data and a reduction in the image processing speed.

An embodiment described herein is to provide an image capture system and a control device therefor that can achieve a reduction in the capacity of the memory storing image data and an improvement in the image processing speed.

In general, according to one embodiment, a control device includes a traveling control unit and an image capture control unit. The traveling control unit controls traveling of a wheeled platform traveling along an image capture plane where a plurality of image capture target objects are arranged, spaced apart from each other in vertical and horizontal directions. The image capture control unit controls an image capture operation of a plurality of cameras installed in a direction perpendicular to a traveling direction of the wheeled platform, according to an image capture timing list set on a per camera basis, of the plurality of cameras.

An embodiment of an image capture system and a control device therefor will now be described with reference to the drawings.

In this embodiment, an image capture system for checking whether information on a shelf label attached to the front of a merchandise rack is corrected or not is described as an example.

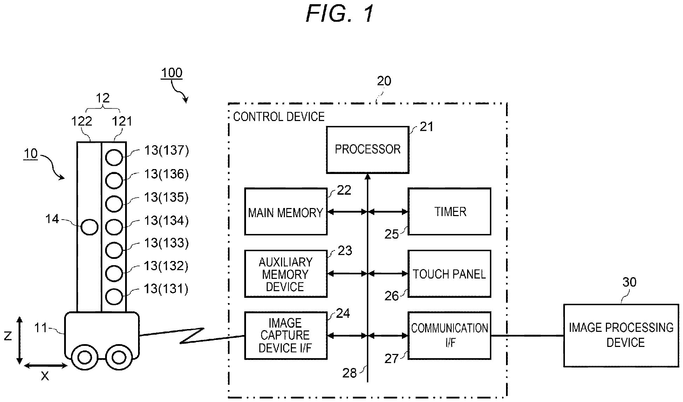

FIG. 1 is a schematic view showing a schematic configuration of an image capture system 100 according to this embodiment. The image capture system 100 includes an image capture device 10 and a control device 20. The image capture device 10 and the control device 20 are connected to each other, for example, via a wireless LAN (local area network) . The image capture device 10 and the control device 20 may be connected to each other via a communication cable for wired communication.

The image capture device 10 is formed of a wheeled platform 11 with a camera installation unit 12 loaded thereon. The wheeled platform 11 is a vehicle freely moving on a floor surface spreading in front of a merchandise rack where a shelf label that is an image capture target object is attached. The wheeled platform 11 is self-propelled to travel in response to a traveling instruction from the control device 20. Such a wheeled platform 11 can be paraphrased as self-propelled robot.

The camera installation unit 12 is formed of a first camera installation unit 121 and a second camera installation unit 122. Each of the first camera installation unit 121 and the second camera installation unit 122 is fixed to a top part of the wheeled platform 11.

The first camera installation unit 121 is a structure where a plurality of first cameras 13 are installed in a line, spaced apart from each other with a predetermined space in a direction (arrow Z) perpendicular to a traveling direction (arrow X) of the wheeled platform 11 and with the lenses thereof facing the same direction. The first camera 13 is a high-resolution narrow-range camera suitable for image capture for the shelf label. In this embodiment, the number of first cameras 13 is seven. The first cameras 13 are given reference numbers "131", "132", "133", "134", "135", "136", and "137" in order from the nearest first camera 13 to the wheeled platform 11 and thus distinguished from each other. In the description below, the reference number "13" is used to collectively refer to the first cameras and the reference numbers "131" to "137" are used in the case of describing the individual first cameras 13.

The second camera installation unit 122 is a structure which has substantially the same shape and size as the first camera installation unit 121 and where one second camera 14 is installed at a center part in the direction of the height and with the lens thereof facing the same direction as each of the first cameras 13. The second camera 14 is a wide-range camera having a wider angle of view than the first camera 13. The second camera 14 is a wide-range camera having an angle of view that enables image capture covering the entirety of the front of at least one merchandise rack.

The control device 20 is a computer device remotely controlling the traveling of the wheeled platform 11 in the image capture device 10 and the image capture operation of the first camera 13 and the second camera 14. The control device 20 has a processor 21, a main memory 22, an auxiliary memory device 23, an image capture device interface 24, a timer 25, a touch panel 26, a communication interface 27, and a system transmission path 28. The system transmission path 28 includes an address bus, a data bus, a control signal line or the like. The system transmission path 28 connects the processor 21 to the other parts directly or via a signal input/output circuit and transmits a data signal sent and received between the processor 21 and the other parts. The control device 20 forms a computer by having the processor 21 connected to the main memory 22, the auxiliary memory device 23, the image capture device interface 24, the timer 25, the touch panel 26, and the communication interface 27 via the system transmission path 28.

The processor 21 is equivalent to a control center of the computer. The processor 21 controls each part so as to implement various functions as the control device 20 according to an operating system or an application program. The processor 21 is a CPU (central processing unit), for example.

The main memory 22 is equivalent to a main memory part of the computer. The main memory 22 includes a non-volatile memory area and a volatile memory area. The main memory 22 stores an operating system or an application program in the non-volatile memory area. The main memory 22 may store data that is necessary for the processor 21 to execute processing for controlling each part, in the non-volatile or volatile memory area. The main memory 22 uses the volatile memory area as a work area where data is suitably rewritten by the processor 21. The non-volatile memory area is a ROM (read-only memory), for example. The volatile memory area is a RAM (random-access memory), for example.

The auxiliary memory device 23 is equivalent to an auxiliary memory part of the computer. For example, an EEPROM (electrically erasable programmable read-only memory), an HDD (hard disk drive), or an SSD (solid-state drive) or the like can serve as the auxiliary memory device 23. In the auxiliary memory device 23, data used by the processor 21 to execute various kinds of processing and data generated through the processing by the processor 21, or the like, are saved. The auxiliary memory device 23 may store the application program.

The image capture device interface 24 is an interface for performing data communication with the image capture device 10, using wireless or wired communication. The image capture device interface 24 transmits, for example, a data signal relating to a traveling instruction such as the start, the stop, the traveling velocity, or the traveling direction of the wheeled platform 11, to the image capture device 10. The image capture device interface 24 receives image data captured by each of the first camera 13 and the second camera 14.

The timer 25 is a peripheral circuit having a function of tracking a set time in response to an instruction from the processor 21 and reporting a time-out every time the timer 25 finishes the tracking of time. The set time will be described later.

The touch panel 26 functions as an input device and a display device of the control device 20. An operator of the control device 20 can operate the touch panel 26 to input necessary data for the control of the image capture device 10, or the like, to the control device 20. The operator can also check the result of image processing by an image processing device 30, described later, from information displayed on the touch panel 26.

The communication interface 27 is an interface for performing data communication with the image processing device 30 connected via a communication line, for example, the internet or the like. The image processing device 30 is a computer device having a processing function of checking whether information on a shelf label is correct or not, based on an image of the shelf label captured by the image capture device 10. The image processing by the image processing device 30 may be implemented, for example, by cloud computing technology.

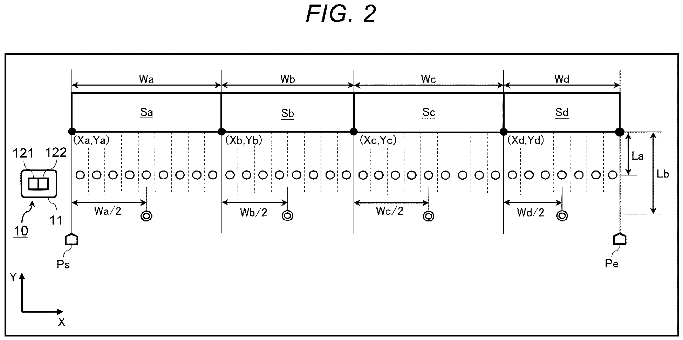

FIG. 2 is a plan view showing an example of a situation where the image capture system 100 according to this embodiment is applied. In FIG. 2, a configuration where four merchandise racks Sa, Sb, Sc, and Sd are installed in a line along an X-axis direction on a floor surface in a store that is equivalent to an XY plane is illustrated as an example. The wheeled platform 11 of the image capture device 10 employs, as a standby point, a floor surface at a position illustrated further to the left of the merchandise rack Sa illustrated at the left end of the four merchandise racks Sa, Sb, Sc, Sd.

The merchandise racks Sa, Sb, Sc, Sd have substantially the same depth and height but have different lateral widths. In an example, a lateral width Wa of the merchandise rack Sa and a lateral width Wc of the merchandise rack Sc are equal, whereas a lateral width Wb of the merchandise rack Sb is narrower than the lateral width Wa or the lateral width Wc, and a lateral width Wd of the merchandise rack Sd is even narrower than the lateral width Wb. The merchandise racks Sa, Sb, Sc, Sd may have any number of shelves. Each shelf may be at any height and is suitably changed according to the number of merchandise items displayed there, the size of the merchandise items, and the like.

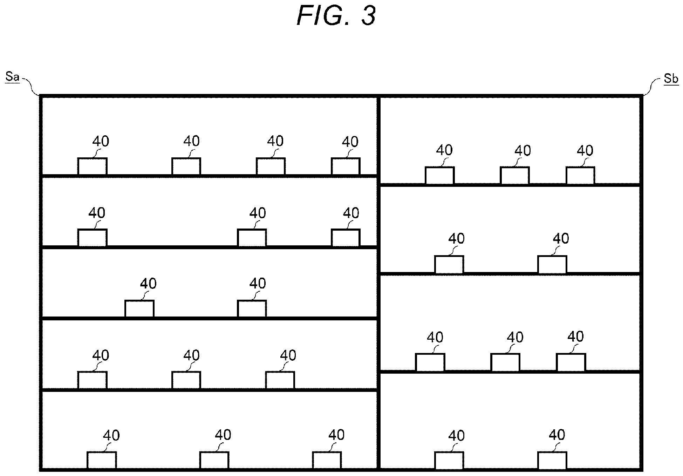

FIG. 3 is a front view of the merchandise rack Sa and the merchandise rack Sb as an example. The illustration of the merchandise rack Sc and the merchandise rack Sd is omitted. As shown in FIG. 3, the number of shelves in the merchandise rack Sa is five. Three shelf labels are attached to each of the first shelf at the bottom, the second shelf, and the fourth shelf. Two shelf labels are attached to the third shelf. Four shelf labels are attached to the fifth shelf at the top. That is, at the front of the merchandise rack Sa, a total of 15 shelf labels 40, which are image capture target objects, are arranged, spaced apart from each other with a suitable space in the direction of the height of the merchandise rack Sa, that is, the vertical direction, and in the direction of the lateral width, that is, the horizontal direction.

Meanwhile, the number of shelves in the merchandise rack Sb is four. Two shelf labels are attached to the first shelf at the bottom and the third shelf. Three shelf labels are attached to the second shelf and the fourth shelf. That is, at the front of the merchandise rack Sb, a total of 10 shelf labels 40, which are image capture target objects, are arranged, spaced apart from each other with a suitable space in the direction of the height of the merchandise rack Sb, that is, the vertical direction, and in the direction of the lateral width, that is, the horizontal direction.

In this way, the merchandise rack Sa and the merchandise rack Sb have different numbers of shelves from each other. Also, the height of each shelf is different between the merchandise rack Sa and the merchandise rack Sb. Therefore, the shelf labels 40 arranged in the merchandise rack Sa and the shelf labels 40 arranged in the merchandise rack Sb are arranged at positions that are different in the vertical direction.

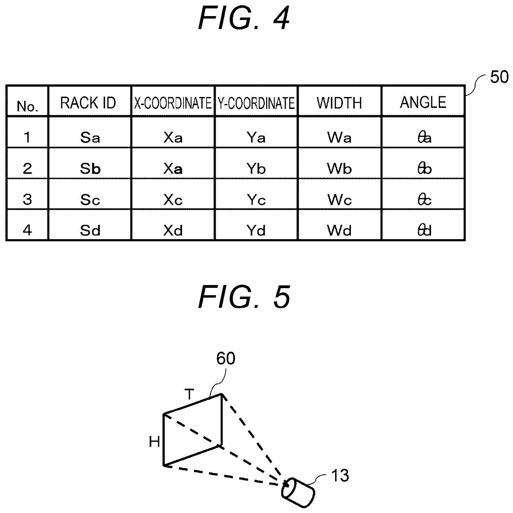

In such a configuration, the control device 20 stores a rack data table 50 having a data structure shown in FIG. 4, for example, in the auxiliary memory device 23. The rack data table 50 is a data table describing each rack data of rack ID, X-coordinate, Y-coordinate, width and angle in correlation with a serial number, as shown in FIG. 4. The rack data table 50 may be stored in the main memory 22.

The serial number is a successive number starting with "1" and the maximum value thereof coincides with the number of merchandise racks to which a shelf label as an image capture target object is attached. Therefore, in the example shown in FIG. 2, the four merchandise racks Sa, Sb, Sc, Sd are the targets and therefore serial numbers "1" to "4" are described in the rack data table 50.

The rack ID is a unique code set on a per merchandise rack basis in order to identify each of the merchandise racks Sa, Sb, Sc, Sd. In the rack data table 50, the rack IDs are described in order from the merchandise rack near the standby point of the wheeled platform 11, in correlation with the serial numbers "1" to "4". Therefore, in the example shown in FIG. 2, the rack IDs are described in order of the merchandise racks Sa, Sb, Sc, Sd in correlation with the serial numbers "1" to "4".

The X-coordinate and the Y-coordinate are coordinate values on the XY plane of a bottom end near the standby position of the wheeled platform 11, of the merchandise racks Sa, Sb, Sc, Sd identified by the corresponding rack ID. Therefore, in the example shown in FIG. 2, the values of coordinates (Xa, Ya) are described as the X-coordinate and the Y-coordinate of the merchandise rack Sa. The values of coordinates (Xb, Yb) are described as the X-coordinate and the Y-coordinate of the merchandise rack Sb. The values of coordinates (Xc, Yc) are described as the X-coordinate and the Y-coordinate of the merchandise rack Sc. The values of coordinates (Xd, Yd) are described as the X-coordinate and the Y-coordinate of the merchandise rack Sd.

The width is the lateral width of the merchandise racks Sa, Sb, Sc, Sd identified by the corresponding rack ID. Therefore, in the example shown in FIG. 2, the value Wa is described as the width of the merchandise rack Sa. The value Wb is described as the width of the merchandise rack Sb. The value Wc is described as the width of the merchandise rack Sc. The value Wd is described as the width of the merchandise rack Sd.

The angle is the angle formed by the direction of the lateral width of the merchandise rack Sa, Sb, Sc, Sd identified by the corresponding rack ID to the X-axis of the XY plane. Therefore, in the example shown in FIG. 2, 0 degrees is described as the angle of all the merchandise racks Sa, Sb, Sc, Sd. By the way, for example, if the merchandise rack Sd is installed in a direction at a right angle to the direction of the width of the merchandise rack Sc, that is, if the merchandise rack Sc and the merchandise rack Sd are installed in an L-shape, 90 degrees is described as the angle of the merchandise rack Sd.

The rack data table 50 having such a data structure is a data table describing data that is necessary for the processor 21 of the control device 20 to control the traveling of the wheeled platform 11 of the image capture device 10 and to control the image capture timing of the first camera 13 and the second camera 14.

In FIG. 2, a plurality of points indicated by single circles represent the image capture points of the first camera 13 for the corresponding merchandise rack Sa, Sb, Sc, Sd. The first camera 13, which is a narrow-range camera, is used to capture an image of the shelf label 40. Therefore, the image capture points of the first camera 13 are spaced apart from the front of the merchandise racks Sa, Sb, Sc, Sd by a distance La suitable for the first camera 13 to capture an image of the shelf label 40. The image capture points indicated by the single circles can be paraphrased as narrow-range image capture points. The narrow-range image capture point is an intermediate point in each section formed by dividing the lateral width of the corresponding merchandise racks Sa, Sb, Sc, Sd at a predetermined interval, at the position spaced apart from the front of the merchandise racks Sa, Sb, Sc, Sd by the distance La. The predetermined interval depends on the image capture range employed when the first camera 13 at the narrow-range image capture point captures an image of the merchandise rack.

FIG. 5 is a schematic view showing an image capture range 60 employed when the first camera 13 at the narrow-range image capture point captures an image of the merchandise rack. The image capture range 60 is a rectangular area having a length T on a side equivalent to the horizontal direction, that is, the direction of the width of the merchandise rack, and a length H on a side equivalent to the vertical direction, that is, the direction of the height of the merchandise rack. The predetermined interval is equal to the length T of the side in the horizontal direction of the image capture range 60.

In FIG. 2, a plurality of points indicated by double circles represent the image capture points of the second camera 14 for the corresponding merchandise racks Sa, Sb, Sc, Sd. The second camera 14, which is a wide-range camera, is used to capture an image of the merchandise racks Sa, Sb, Sc, Sd. Therefore, the image capture points of the second camera 14 are spaced apart by a distance Lb such that the second camera 14 can capture an image of the entire front of the merchandise rack having the largest size, of the merchandise racks Sa, Sb, Sc, Sd. The image capture points indicated by the double circles can be paraphrased as wide-range image capture points. The wide-range image capture point is a point half the lateral width of the corresponding merchandise racks Sa, Sb, Sc, Sd, at the position spaced apart from the front of the merchandise racks Sa, Sb, Sc, Sd by the distance Lb.

The processor 21 controls the traveling of the wheeled platform 11 in such a way that the image capture device 10 arrives at the image capture point of the first camera 13 or the image capture point of the second camera 14 for each merchandise rack Sa, Sb, Sc, Sd, based on the data in the rack data table 50. The processor 21 also controls the image capture timing of the first camera 13 and the second camera 14 in such a way that the first camera 13 performs image capture at the image capture point of the first camera 13 and that the second camera 14 performs image capture at the image capture point of the second camera 14.

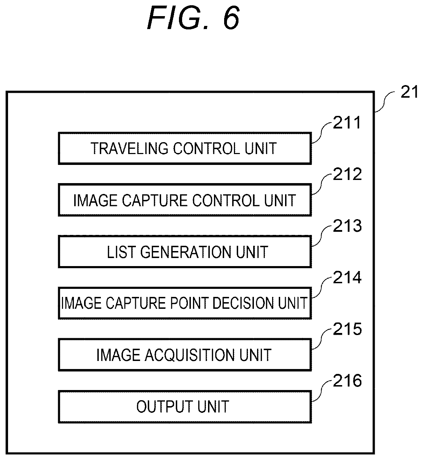

FIG. 6 is an explanatory view of main functions of the processor 21 of the control device 20. As shown in FIG. 6, the processor 21 has functions as a traveling control unit 211, an image capture control unit 212, a list generation unit 213, an image capture point decision unit 214, an image acquisition unit 215, and an output unit 216.

The traveling control unit 211 is a function of controlling the constant-velocity traveling of the wheeled platform 11 traveling along an image capture plane where a plurality of image capture target objects, that is, the shelf labels 40, are arranged, spaced apart from each other in the vertical and horizontal directions, that is, along the front of the merchandise racks Sa, Sb, Sc, Sd.

The image capture control unit 212 is a function of controlling the image capture operation at the narrow-range image capture point, of a plurality of cameras, that is, the first cameras 13, installed in the direction perpendicular to the traveling direction of the wheeled platform 11, according to an image capture timing list set on a per first camera 13 basis, of the plurality of first cameras 13.

The list generation unit 213 is a function of specifying the positions of a plurality of image capture target objects, that is, the shelf labels 40, arranged on the image capture plane, from a captured image of the image capture plane, that is, the front of the merchandise racks Sa, Sb, Sc, Sd, and generating an image capture timing list, based on the positions of the plurality of image capture target objects and the image capture ranges of the plurality of first cameras 13.

The image capture point decision unit 214 is a function of deciding the image capture point of the second camera 14 to the image capture plane, that is, the wide-range image capture point for each of the merchandise racks Sa, Sb, Sc, Sd. By the way, the narrow-range image capture point from the point of the coordinates (X, Y) in each of the merchandise racks Sa, Sb, Sc, Sd described in the rack data table 50 is a point shifted by half the length T (T/2) of the side in the horizontal direction of the image capture range 60. The other narrow-range image capture points are points shifted by the length T of the side in the horizontal direction of the image capture range 60.

The image acquisition unit 215 is a function of moving the wheeled platform 11 to the wide-range image capture point decided by the image capture point decision unit 214 before the traveling control unit 211 controls the traveling of the wheeled platform 11, then causing the second camera 14 to perform image capture, and thus acquiring an image that is necessary for generating the image capture timing list.

The output unit 216 is a function of outputting the images captured by the plurality of first cameras 13 under the control of the image capture control unit 212, to the image processing device 30.

All of the functions as the traveling control unit 211, the image capture control unit 212, the list generation unit 213, the image capture point decision unit 214, the image acquisition unit 215, and the output unit 216 are implemented by information processing executed by the processor 21 according to a control program. The control program is a type of application program stored in the main memory 22 or the auxiliary memory device 23. The method of installing the control program in the main memory 22 or the auxiliary memory device 23 is not particularly limited. The control program may be recorded in a removable recording medium or distributed by communication via a communication network and thus can installed in the main memory 22 or the auxiliary memory device 23. The recording medium may be any form of recording medium that can store a program and is readable by a device, such as a CD-ROM or a memory card.

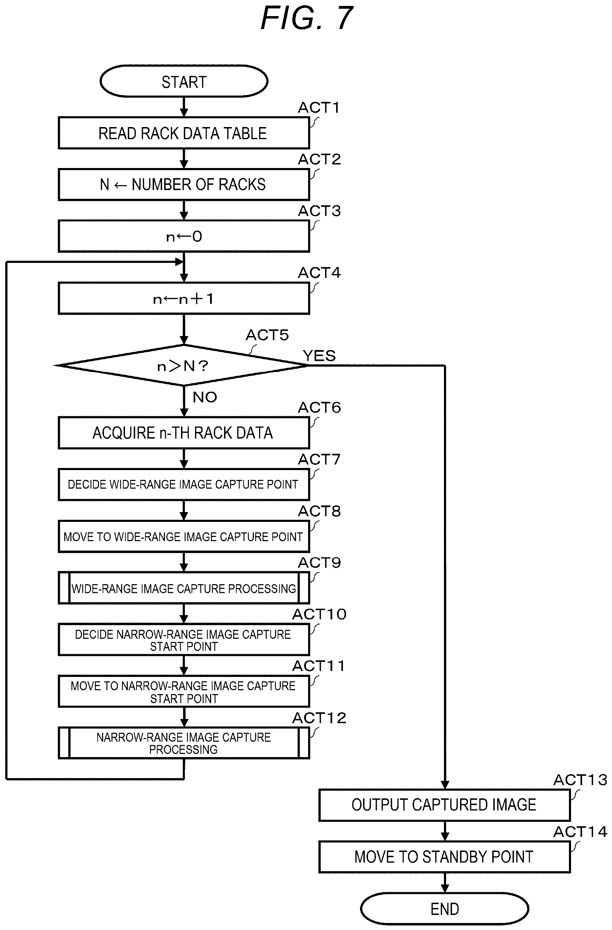

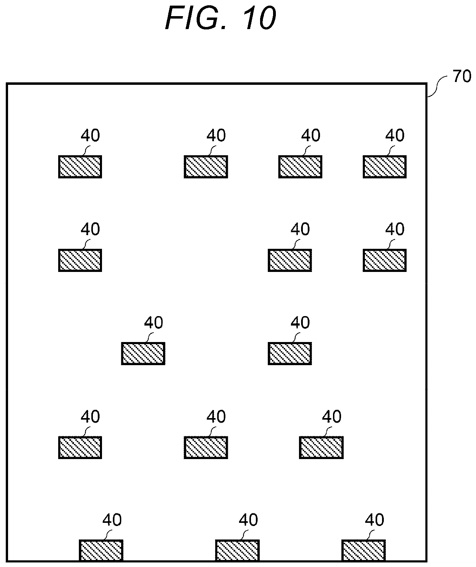

FIGS. 7 to 9 are flowcharts showing main procedures of the information processing executed by the processor 21 of the control device 20 according to the control program. FIGS. 10 to 13 are diagrams used for supplementary explanation of the information processing. Principal operations of the image capture system 100 including the control device 20 will now be described, using the drawings.

For example, when the control start time comes and the control program starts, the processor 21 starts the procedures shown in the flowchart of FIG. 7. First, in ACT 1, the processor 21 reads the rack data table 50 from the auxiliary memory device 23 or the main memory 22. In ACT 2, the processor 21 describes the maximum value of the serial numbers in the rack data table 50 as the number of processing target merchandise racks in a register memory N. In ACT 3, the processor 21 resets a first counter n.

After finishing the processing of ACT 2 and ACT 3, the processor 21 increments the value of the first counter n by "1" in ACT 4. In ACT 5, the processor 21 checks whether the value of the first counter n exceeds the value of the register memory N or not.

If the value of the first counter n does not exceed the value of the register memory N (NO in ACT 5), the processor 21 proceeds to ACT 6. In ACT 6, the processor 21 acquires n-th rack data (rack ID, X-coordinate, Y-coordinate, width, angle) corresponding to a serial number equal to the value of the first counter n, from the rack data table 50. For example, if the value of the first counter n is "1", the processor 21 acquires the rack data of the merchandise rack Sa.

In ACT 7, the processor 21 decides a wide-range image capture point for the merchandise rack identified by the rack ID of the rack data. For example, if the value of the first counter n is "1", the processor 21 decides a point that is advanced from the point of the coordinates (Xa, Ya) by a distance half the width Wa in a direction tilting from the X-axis by an angle θa and that is spaced apart from the front of the merchandise rack Sa by the distance Lb, as the wide-range image capture point.

In ACT 8, the processor 21 moves the wheeled platform 11 of the image capture device 10 to the wide-range image capture point. For example, if the value of the first counter n is "1", the wheeled platform 11 is standing still at the standby point. The processor 21 controls the traveling direction, the traveling velocity and the like of the wheeled platform 11 in such a way that the wheeled platform 11 moves from the standby point to the wide-range image capture point and stops there.

When the wheeled platform 11 has stopped at the wide-range image capture point, the processor 21 executes wide-range image capture processing in ACT 9. Details of the wide-range image capture processing will be described later. During the execution of the wide-range image capture processing, the wheeled platform 11 does not move from the wide-range image capture point. After finishing the wide-range image capture processing, the processor 21 in ACT 10 decides a narrow-range image capture start point for the merchandise rack identified by the rack ID of the rack data. For example, if the value of the first counter n is "1", the processor 21 decides a point spaced apart from the point of the coordinates (Xa, Ya) by the distance La, as the narrow-range image capture start point.

In ACT 11, the processor 21 moves the wheeled platform 11 of the image capture device 10 to the narrow-range image capture start point. For example, if the value of the first counter n is "1", the processor 21 controls the traveling direction, the traveling velocity and the like of the wheeled platform 11 in such a way that the wheeled platform 11 moves from the wide-range image capture point to the narrow-range image capture start point for the merchandise rack Sa and stops there.

When the wheeled platform 11 stopped at the narrow-range image capture start point, the processor 21 in ACT 12 executes narrow-range image capture processing. Details of the narrow-range image capture processing will be described later. After finishing the narrow-range image capture processing, the processor 21 returns to ACT 4. The processor 21 increments the value of the first counter n further by "1". If the value of the first counter n does not exceed the value of the register memory N, the processor 21 executes the processing of ACT 6 to ACT 12 similarly to the above. That is, the processor 21 decides a wide-range image capture point for the merchandise rack Sb, for example, based on the rack data of the merchandise rack Sb, then moves the wheeled platform 11 to the wide-range image capture point, and executes the wide-range image capture processing. The processor 21 also decides a narrow-range image capture start point for the merchandise rack Sb, based on the rack data of the merchandise rack Sb, then moves the wheeled platform 11 to the narrow-range image capture start point, and executes the narrow-range image capture processing.

From this point onward, the processor 21 alternately executes the wide-range image capture processing and the narrow-range image capture processing, for example, based on the rack data of the merchandise rack Sc and also the rack data of the merchandise rack Sd. If the value of the first counter n exceeds the value of the register memory N (YES in ACT 5), the processor 21 proceeds to ACT 13. In ACT 13, the processor 21 outputs the image data captured by the plurality of first cameras 13 to the image processing device 30 via the communication interface 27. In ACT 14, the processor 21 controls the traveling direction, the traveling velocity and the like of the wheeled platform 11 in such a way that the wheeled platform 11 moves to the standby position and stops there. Then, the processor 21 ends the information processing according to the control program.

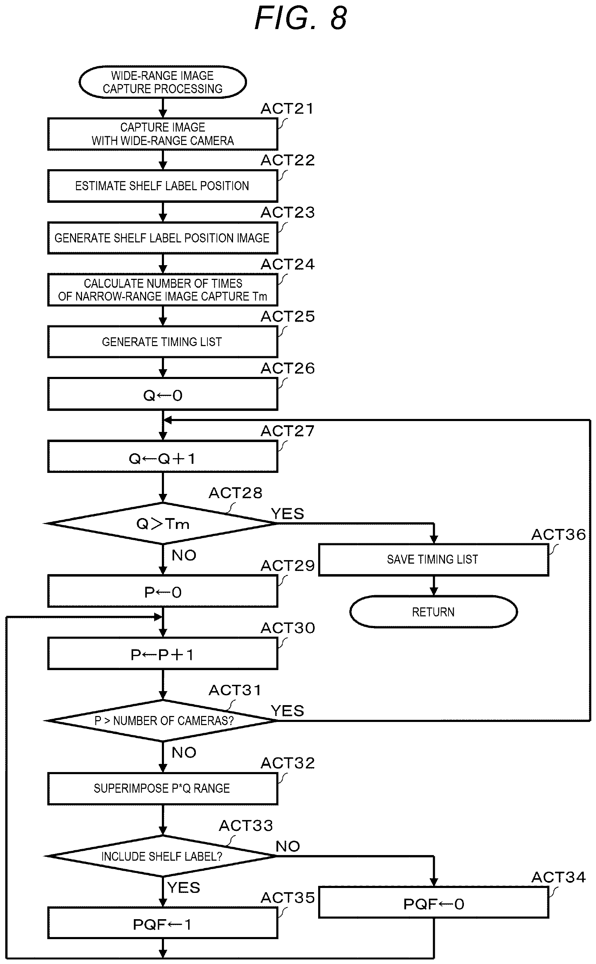

FIG. 8 is a flowchart showing main procedures of the wide-range image capture processing. In the description below, the wide-range image capture processing for the merchandise rack Sa is described. The wide-range image capture processing for the other merchandise racks Sb, Sc, Sd involves similar procedures and therefore the description thereof is omitted.

On entering the wide-range image capture processing, the processor 21 in ACT 21 outputs an image capture ON signal to the wide-range camera, that is, the second camera 14. On receiving the image capture ON signal, the second camera 14 executes an image capture operation. Thus, an image of the entire front of the merchandise rack Sa is captured by the second camera 14 and the image data thereof is sent to the control device 20 via the image capture device interface 24.

In ACT 22, the processor 21 estimates the position of the shelf label 40 arranged in the merchandise rack Sa, based om the image data. For the estimation of the shelf label position, for example, a learning technique of a hierarchical neural network called deep neural network (DNN) is used. That is, a DNN model for the detection of the shelf label is designed and the DNN model is installed in the control device 20. The processor 21 inputs the captured image of the merchandise rack Sa to the DNN model. Then, due to the action of the DNN model, each shelf label 40 arranged in the merchandise rack Sa is detected and the position of each shelf label 40 is estimated. In ACT 23, the processor 21 generates a shelf label position image 70 in which the position of the shelf label 40 is filled in black, as shown in FIG. 10.

If an image of the merchandise rack Sb having a narrower lateral width than the merchandise rack Sa is captured by the second camera 14, the shelf label 40 in the merchandise rack Sa or the merchandise rack Sc next to the merchandise rack Sb may appear in the captured image. In this case, the processor 21 ignores the shelf label 40 detected outside the frame of the merchandise rack Sb and specifies only the position of the shelf label 40 detected within the frame.

In ACT 24, the processor 21 calculates a number of times of narrow-range image capture Tm. Specifically, the processor 21 divides the lateral width Wa of the merchandise rack Sa included in the rack data by the length T of the side in the horizontal direction of the image capture range 60 employed when the first camera 13 at the narrow-range image capture point captures an image of the merchandise rack Sa, and defines the quotient (where the numbers after the decimal point are rounded up) as the number of times of narrow-range image capture Tm.

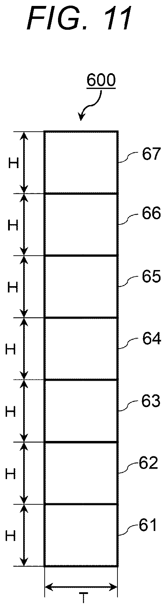

FIG. 11 is a schematic view showing an image capture range 600 of the seven first cameras 13 installed in the first camera installation unit 121 of the image capture device 10. In FIG. 11, an image capture range 61 is the image capture range of the first camera 131. An image capture range 62 is the image capture range of the first camera 132. An image capture range 63 is the image capture range of the first camera 133. An image capture range 64 is the image capture range of the first camera 134. An image capture range 65 is the image capture range of the first camera 135. An image capture range 66 is the image capture range of the first camera 136. An image capture range 67 is the image capture range of the first camera 137. In this way, the image capture range 600 is a rectangular area where the length of a side equivalent to the vertical direction, that is, the direction of the height of the merchandise rack Sa, is seven times the length H of the side in the vertical direction of the image capture range 60 and where the length of a side equivalent to the horizontal direction, that is, the direction of the lateral width of the merchandise rack Sa, is equal to the length T of the side in the horizontal direction of the image capture range 60. Therefore, shifting this image capture range 600 sequentially in the direction of the lateral width of the merchandise rack Sa at the interval of the length T by the number of times of narrow-range image capture Tm causes the entire front of the merchandise rack Sa to be included in the image capture range of the first cameras 13.

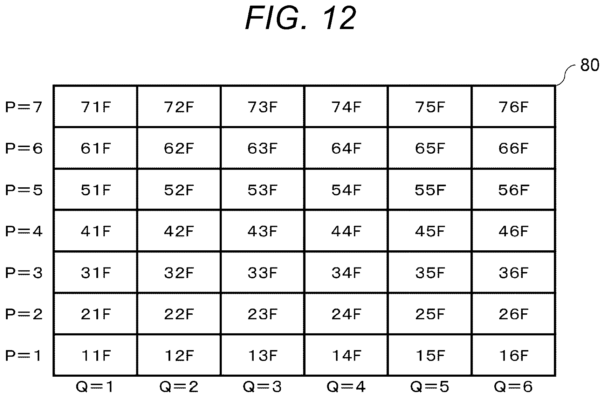

In ACT 25, the processor 21 generates a timing list 80 (see FIG. 12). FIG. 12 shows an example of the timing list 80. The timing list 80 is a data area in a matrix format where the number of first cameras 13 is equivalent to the number of rows and where the number of times of narrow-range image capture Tm is equivalent to the number of columns. In each data area PQ specified by a row number P and a column number Q, an image capture flag PQF is described. The image capture flag PQF is 1-bit data for identifying whether the first camera 13 corresponding to the row number P performs image capture at the narrow-range image capture point corresponding to the column number Q, or not. In this embodiment, an image capture flag PQF indicating that the first camera 13 performs image capture is set to "1" and an image capture flag PQF indicating that the first camera 13 does not perform image capture is set to "0". By the way, at the point of ACT 25, all the image capture flags PQF are uniformly set to "0" or "1".

In ACT 26, the processor 21 resets the value of a second counter Q to "0". Next, in ACT 27, the processor 21 increments the value of the second counter Q by "1". In ACT 28, the processor 21 checks whether the value of the second counter Q exceeds the number of times of narrow-range image capture Tm or not.

If the value of the second counter Q does not exceed the number of times of narrow-range image capture Tm (NO in ACT 28), the processor 21 proceeds to ACT 29. In ACT 29, the processor 21 resets the value of a third counter P to "0". Next, in ACT 30, the processor 21 increments the value of the third counter P by "1". In ACT 31, the processor 21 checks whether the value of the third counter P exceeds the number of first cameras 13 or not.

If the value of the third counter P does not exceed the number of first cameras 13 (NO in ACT 31), the processor 21 proceeds to ACT 32. In ACT 32, the processor 21 superimposes, on the shelf label position image 70, the image capture range 60 employed when the first camera 13 corresponding to the row number P performs image capture at the narrow-range image capture point corresponding to the column number Q.

In ACT 33, the processor 21 checks whether the shelf label 40 is included in the area where the image capture range 60 is superimposed, in the shelf label position image 70, or not. If the shelf label 40 is not included in the area where the image capture range 60 is superimposed, in the shelf label position image 70 (NO in ACT 33), the processor 21 proceeds to ACT 34. In ACT 34, the processor 21 sets the image capture flag PQF of the data area PQ specified by the row number P and the column number Q to "0". If the shelf label 40 is included in the area where the image capture range 60 is superimposed, in the shelf label position image 70 (YES in ACT 33), the processor 21 proceeds to ACT 35. In ACT 35, the processor 21 sets the image capture flag PQF of the data area PQ to "1".

After finishing the processing of ACT 34 or ACT 35, the processor 21 returns to ACT 30. The processor 21 then executes the processing from ACT 30 onward, similarly to the above. That is, the processor 21 repeatedly executes the processing of ACT 32 to ACT 35 until the value of the third counter P exceeds the number of first cameras 13.

If the third counter P exceeds the number of first cameras 13 (YES in ACT 31), the processor 21 returns to ACT 27. The processor 21 then executes the processing from ACT 27 onward, similarly to the above. That is, the processor 21 increments the value of the second counter Q further by "1". If the value of the second counter Q does not exceed the number of times of narrow-range image capture Tm, the processor 21 resets the value of the third counter P to "0". Subsequently, the processor 21 executes the processing of ACT 32 to ACT 35 every time the value of the third counter P is incremented. Then, if the value of the third counter P exceeds the number of first cameras 13, the processor 21 returns to ACT 27 again and increments the value of the second counter Q further by "1".

If the value of the second counter Q exceeds the number of times of narrow-range image capture Tm (YES in ACT 28), the processor 21 proceeds to ACT 36. In ACT 36, the processor 21 saves, in the auxiliary memory device 23, the timing list 80 where the image capture flag PQF of "1" or "0" is described in the P×Q data areas PQ corresponding to the individual row numbers P and the individual column numbers Q. Then, the processor 21 exits the wide-range image capture processing for the merchandise rack Sa.

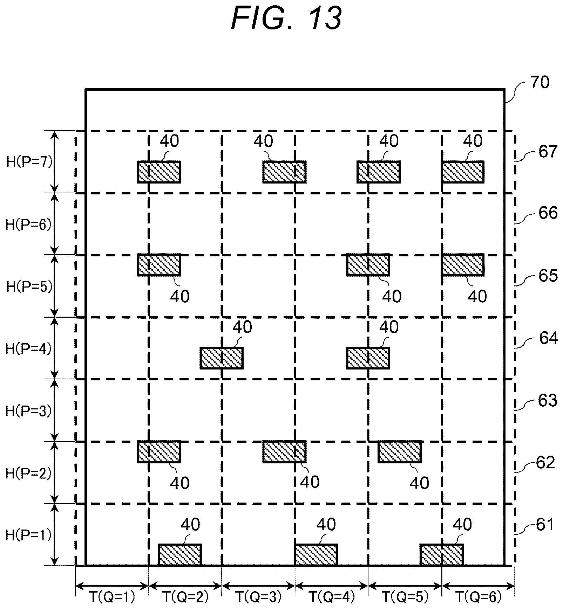

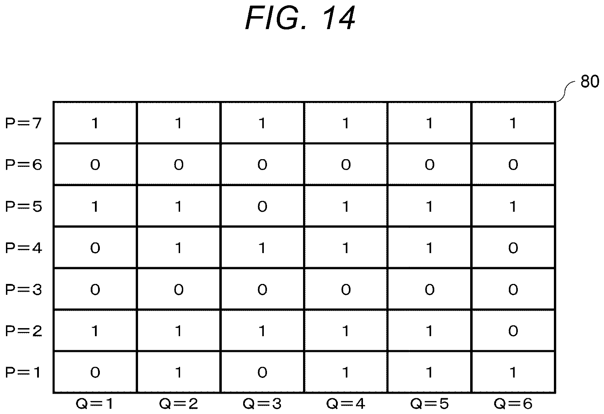

FIG. 13 is a schematic view showing an example where the image capture ranges 61, 62, 63, 64, 65, 66, 67 of the seven first cameras 131, 132, 133, 134, 135, 136, 137 are superimposed on the shelf label position image 70 for the merchandise rack Sa by the number of times of narrow-range image capture Tm while being shifted by the length T each. In this example, with respect to the image capture range 61 of the first camera 131 corresponding to the row number P=1, the shelf label is included in the areas of the column numbers Q=2, 4, 5, 6. Consequently, image capture flags 12F, 14F, 15F, 16F are "1" and image capture flags 11F, 13F are "0", as shown in FIG. 14.

Similarly, with respect to the image capture range 62 of the first camera 132 corresponding to the row number P=2, the shelf label is included in the areas of the column numbers Q=1, 2, 3, 4, 5. Consequently, image capture flags 21F, 22F, 23F, 24F, 25F are "1" and an image capture flag 26F is "0", as shown in FIG. 14.

With respect to the image capture range 63 of the first camera 133 corresponding to the row number P=3, the shelf label is not included in any one of the areas of all the column numbers Q. Consequently, all of image capture flags 31F, 32F, 33F, 34F, 35F, 36F are "0", as shown in FIG. 14.

With respect to the image capture range 64 of the first camera 134 corresponding to the row number P=4, the shelf label is included in the areas of the column numbers Q=2, 3, 4, 5. Consequently, image capture flags 42F, 43F, 44F, 45F are "1" and image capture flags 41F, 46F are "0", as shown in FIG. 14.

With respect to the image capture range 65 of the first camera 135 corresponding to the row number P=5, the shelf label is included in the areas of the column numbers Q=1, 2, 4, 5, 6. Consequently, image capture flags 51F, 52F, 54F, 55F, 56F are "1" and an image capture flag 53F is "0", as shown in FIG. 14.

With respect to the image capture range 66 of the first camera 136 corresponding to the row number P=6, the shelf label is not included in any one of the areas of all the column numbers Q. Consequently, all of image capture flags 61F, 62F, 63F, 64F, 65F, 66F are "0".

With respect to the image capture range 67 of the first camera 137 corresponding to the row number P=7, the shelf label is included in the areas of all the column numbers Q. Consequently, all of image capture flags 71F, 72F, 73F, 74F, 75F, 76F are "1".

Thus, in the wide-range image capture processing for the merchandise rack Sa, the timing list 80 shown in FIG. 14 is generated for the merchandise rack Sa. By the way, it is a matter of course that the value of the image capture flag PQF varies among the timing lists 80 generated for the merchandise rack Sb, for the merchandise rack Sc, and for the merchandise rack Sd in the wide-range image capture processing for the merchandise rack Sb, the merchandise rack Sc, and the merchandise rack Sd, respectively.

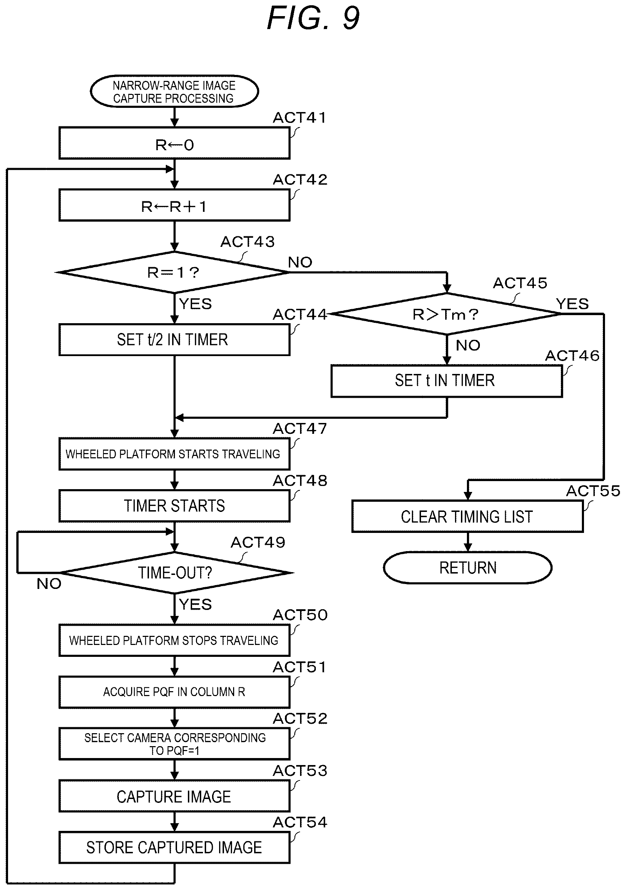

FIG. 9 is a flowchart showing main procedures of the narrow-range image capture processing. In the description below, the narrow-range image capture processing for the merchandise rack Sa is described. The narrow-range image capture processing for the other merchandise racks Sb, Sc, Sd involves similar procedures and therefore the description thereof is omitted.

On entering the narrow-range image capture processing, the processor 21 in ACT 41 resets the value of a fourth counter R to "0". Next, in ACT 42, the processor 21 increments the value of the fourth counter R by "1". In ACT 43, the processor 21 checks whether the value of the fourth counter R is "1" or not. If the value of the fourth counter R is "1" (YES in ACT 43), the processor 21 proceeds to ACT 44. In ACT 44, the processor 21 sets a time-out time t/2 in the timer 25. The time-out time t/2 is half the time taken for the wheeled platform 11 to move the length T of the side in the horizontal direction of the image capture range 60.

If the value of the fourth counter R is not "1", that is, if the value is "2" or greater (NO in ACT 43), the processor 21 proceeds to ACT 45. In ACT 45, the processor 21 checks whether the value of the fourth counter R exceeds the number of times of narrow-range image capture Tm or not.

If the value of the fourth counter R does not exceed the number of times of narrow-range image capture Tm (NO in ACT 45), the processor 21 proceeds to ACT 46. In ACT 46, the processor 21 sets a time-out time t in the timer 25. The time-out time t is the time taken for the wheeled platform 11 to move the length T of the side in the horizontal direction of the image capture range 60.

After finishing the processing of ACT 44 or ACT 46, the processor 21 proceeds to ACT 47. In ACT 47, the processor 21 controls the start of the traveling of the wheeled platform 11. In ACT 48, the processor 21 causes the timer 25 to start. In ACT 49, the processor 21 waits for the timer 25 to reach a time-out. If the timer 25 reaches a time-out (YES in ACT 49), the processor 21 proceeds to ACT 50. In ACT 50, the processor 21 causes the wheeled platform 11 to stop traveling.

In the narrow-range image capture processing after the wheeled platform 11 moves to the narrow-range image capture start point in ACT 11 in FIG. 7, the value of the fourth counter R is "1" and therefore the time-out time t/2 is set in the timer 25. In this state, the processor 21 controls the wheeled platform 11 in such a way that the wheeled platform 11 moves at a constant velocity along the direction of the width of the merchandise rack Sa (X-direction) from the narrow-range image capture start point of the coordinates (Xa, Ya). The velocity of the wheeled platform 11 is such a velocity that the wheeled platform 11 moves half the length T of the side in the horizontal direction of the image capture range 60 while the timer 25 tracks the time t/2. Therefore, at the point when the timer 25 reaches a time-out, the wheeled platform 11 stops at a point away from the narrow-range image capture start point of the coordinates (Xa, Ya) by a distance T/2 in the direction of the width of the merchandise rack Sa (X-direction).

After finishing the processing of ACT 50, the processor 21 in ACT 51 acquires the image capture flag PQF in a column R of the column number Q corresponding to the value of the fourth counter R, from the timing list 80. In ACT 52, the processor 21 selects the first camera 13 corresponding to the image capture flag PQF of "1".

In ACT 53, the processor 21 outputs an image capture ON signal to the selected first camera 13. The processor 21 does not output an image capture ON signal to the first camera 13 that is not selected. The first camera 13 received the image capture ON signal executes an image capture operation. In ACT 54, the processor 21 takes in the image captured by the first camera 13 received the image capture ON signal and stores the image in a memory M for storing the captured image. The memory M is a part of the volatile area in the main memory 22.

Therefore, when the value of the fourth counter R is "1", the processor 21 acquires the image capture flags 11F, 21F, 31F, 41F, 51F, 61F, 71F. As shown in FIG. 14, the image capture flag 11F is "0". The image capture flag 21F is "1". The image capture flag 31F is "0". The image capture flag 41F is "0". The image capture flag 51F is "1". The image capture flag 61F is "0". The image capture flag 71F is "1". Therefore, the processor 21 outputs an image capture ON signal to the first camera 132, the first camera 135, and the first camera 137. The processor 21 does not output an image capture ON signal to the first camera 131, the first camera 133, the first camera 134, and the first camera 136. Consequently, images captured by the first camera 132, the first camera 135, and the first camera 137 are stored in the memory M.

After finishing storing all of the images captured by the first camera 132, the first camera 135, and the first camera 137 in the memory M, the processor 21 returns to ACT 42. That is, the processor 21 increments the value of the fourth counter R further by "1". Thus, the value of the fourth counter R becomes "2", which does not exceed the number of times of narrow-range image capture Tm. Therefore, the processor 21 sets the time-out time t in the timer 25. The processor 21 then controls the start of the traveling of the wheeled platform 11 and causes the timer 25 to start. If the timer 25 reaches a time-out, the processor 21 causes the wheeled platform 11 to stop traveling. The velocity of the wheeled platform 11 in this case, too, is such a velocity that the wheeled platform 11 moves half the length T of the side in the horizontal direction of the image capture range 60 while the timer 25 tracks the time t/2, that is, such a velocity that the wheeled platform 11 moves the length T of the side in the horizontal direction of the image capture range 60 while the timer 25 tracks the time t. Therefore, the wheeled platform 11 stops at a point away from the narrow-range image capture start point of the coordinates (Xa, Ya) by a distance 3T/2 in the direction of the width of the merchandise rack Sa (X-direction).

At this time, the processor 21 acquires the image capture flags 12F, 22F, 32F, 42F, 52F, 62F, 72F. As shown in FIG. 14, the image capture flag 12F is "1". The image capture flag 22F is "1". The image capture flag 32F is "0". The image capture flag 42F is "1". The image capture flag 52F is "1". The image capture flag 62F is "0". The image capture flag 72F is "1". Therefore, the processor 21 outputs an image capture ON signal to the first camera 131, the first camera 132, the first camera 134, the first camera 135, and the first camera 137. The processor 21 does not output an image capture ON signal to the first camera 133 and the first camera 136. Consequently, images captured by the first camera 131, the first camera 132, the first camera 134, the first camera 135, and the first camera 137 are stored in the memory M.

Subsequently, the value of the fourth counter R becomes "3". In this case, too, the processor 21 sets the time-out time t in the timer 25 because the value of the fourth counter R does not exceed the number of times of narrow-range image capture Tm. The processor 21 then controls the start of the traveling of the wheeled platform 11 and causes the timer 25 to start. If the timer 25 reaches a time-out, the processor 21 causes the wheeled platform 11 to stop traveling. The velocity of the wheeled platform 11 in this case, too, is the same as when the value of the fourth counter R is "1" or "2". Therefore, the wheeled platform 11 stops at a point away from the narrow-range image capture start point of the coordinates (Xa, Ya) by a distance 5T/2 in the direction of the width of the merchandise rack Sa (X-direction).

At this time, the processor 21 acquires the image capture flags 13F, 23F, 33F, 43F, 53F, 63F, 73F. As shown in FIG. 14, the image capture flag 13F is "0". The image capture flag 23F is "1". The image capture flag 33F is "0". The image capture flag 43F is "1". The image capture flag 53F is "0". The image capture flag 63F is "0". The image capture flag 73F is "1". Therefore, the processor 21 outputs an image capture ON signal to the first camera 132, the first camera 134, and the first camera 137. The processor 21 does not output an image capture ON signal to the first camera 131, the first camera 133, the first camera 135, and the first camera 136. Consequently, images captured by the first camera 132, the first camera 134, and the first camera 137 are stored in the memory M.

From this point onward, every time the value of the fourth counter R is incremented to "4", "5", and "6", the processor 21 executes processing similar to when the value of the fourth counter R is "2" or "3". Consequently, when the value of the fourth counter R is "4", images captured by the first camera 131, the first camera 132, the first camera 134, the first camera 135, and the first camera 137 are stored in the memory M. When the value of the fourth counter R is "5", again, images captured by the first camera 131, the first camera 132, the first camera 134, the first camera 135, and the first camera 137 are stored in the memory M. When the value of the fourth counter R is "6", images captured by the first camera 131, the first camera 135, and the first camera 137 are stored in the memory M.

Subsequently, the value of the fourth counter R becomes "7", which exceeds the number of times of narrow-range image capture Tm. If the value of the fourth counter R exceeds the number of times of narrow-range image capture Tm (YES in ACT 45), the processor 21 proceeds to ACT 53. In ACT 53, the processor 21 clears the timing list 80. Then, the processor 21 exits the narrow-range image capture processing for the merchandise rack Sa.

Subsequently, the processor 21 decides a wide-range image capture point for the merchandise rack Sb, moves the wheeled platform 11 to the wide-range image capture point, and executes the wide-range image capture processing for the merchandise rack Sb. Then, the processor 21 decides a narrow-range image capture start point for the merchandise rack Sb, moves the wheeled platform 11 to the narrow-range image capture start point, and executes the narrow-range image capture processing for the merchandise rack Sb.

The processor 21 executes the processing of ACT 47 to ACT 50 in FIG. 9 and thus implements the function as the traveling control unit 211. The processor 21 executes the processing of ACT 51 to ACT 53 in FIG. 9 and thus implements the function as the image capture control unit 212.

The processor 21 executes the processing of ACT 6 and ACT 7 in FIG. 7 and thus implements the function as the image capture point decision unit 214. The processor 21 executes the processing of ACT 8 in FIG. 7 and ACT 21 in FIG. 8 and thus implements the function as the image acquisition unit 215. The processor 21 executes the processing of ACT 22 and ACT 36 in FIG. 8 and thus implements the function as the list generation unit 213. The processor 21 executes the processing of ACT 13 in FIG. 7 and thus implements the function as the output unit 216.

In this way, with the control device 20 having the functions as the traveling control unit 211 and the image capture control unit 212, each first camera 13 does not capture an image that does not include the shelf label 40. Therefore, the capacity of the memory M storing image data captured by each first camera 13 can be saved. Also, since the control device 20 does not process image data that does not include the shelf label 40, the overall speed for data processing can be increased.

The control device 20 has the list generation unit 213. Thus, a separate device for generating the timing list 80 is not needed and therefore the time and effort taken for generating the timing list 80 can be reduced.

The control device 20 also has the image capture point decision unit 214 and the image acquisition unit 215. The control device 20 causes the list generation unit 213 to generate the timing list 80, based on an image acquired by the image acquisition unit 215. Therefore, for example, even if the position where the shelf label 40 is attached in a merchandise rack is changed, the timing list 80 corresponding to the change can be easily generated and this enhances versatility.

The control device 20 also has the output unit 216. Therefore, the image processing device 30 does not process unwanted image data of an image that does not include the shelf label 40, either. This can achieve a load reduction effect on the image processing device 30. Also, the amount of communication traffic between the control device 20 and the image processing device 30 can be reduced.

Thus, the image capture system 100 that can achieve a reduction in the capacity of a memory storing image data and an improvement in the image processing can be provided.

An embodiment of the image capture system 100 and the control device 20 therefor was described above. However, this embodiment is not limiting.

For example, the control device 20 can also be applied to other cases than recognizing characters on the shelf label 40 arranged in a merchandise rack. For example, the control device 20 can also be applied to an image capture system where a first camera captures an image of a barcode printed on a cardboard box randomly placed in a warehouse or the like and where the barcode is recognized from the captured image.

In the embodiment, the case where the individual merchandise racks have the same height is described as an example. However, the individual merchandise racks may have different heights from each other. In this case, the number of first cameras 13 installed in the first camera installation unit 121 may be decided, based on the tallest merchandise rack.

In the embodiment, the predetermined interval between the narrow-range image capture points next to each other is equal to the length T of the side in the horizontal direction of the image capture range 60. This interval may be slightly shorter than the length T and images sequentially captured by the same first camera 13 may partly overlap each other.

In the embodiment, the case where the wide-range image capture processing is executed for one merchandise rack so as to generate a timing list 80, then the narrow-range image capture processing using the timing list 80 is executed, and the timing list 80 is cleared, is described as an example. In this regard, first, the wide-range image capture processing may be sequentially executed for two or more merchandise racks so as to generate a timing list 80 for each of the merchandise racks, and subsequently, the narrow-range image capture processing may be executed on a per merchandise rack basis, using the timing list 80 corresponding to the merchandise rack.

The timing list 80 may not necessarily correspond one-to-one to the merchandise rack. If two merchandise racks Sa, Sb are next to each other as shown in FIG. 3 and the second camera 14 can capture an image of the entire front of the two merchandise racks Sa, Sb, one timing list 80 may be generated for the two merchandise racks Sa, Sb. Doing so reduces the number of time the wheeled platform 11 needs to move for the wide-range image capture processing and therefore can increase the processing efficiency.

While some embodiments of the present disclosure have been described, these embodiments are presented simply as examples and are not intended to limit the scope of the present disclosure. These novel embodiments can be carried out in various other forms and can include various omissions, replacements, and modifications without departing from the scope of the present disclosure as indicated in the appended claims.

## Claims

1. A control device (20), comprising:
a traveling controller configured to control traveling of a wheeled platform (11) traveling along an image capture plane where a plurality of image capture target objects are arranged, spaced apart from each other in vertical and horizontal directions;
an image capture controller configured to control an image capture operation at first image capture points (Q) along the image capture plane, of a plurality of first cameras (13) installed in a direction perpendicular to a traveling direction of the wheeled platform (11), according to an image capture timing list set on a per camera basis, of the plurality of first cameras (13); and
a list generation component configured to specify positions of the plurality of image capture target objects arranged on the image capture plane, from an image of the image capture plane captured, by a second camera (14) installed on the wheeled platform (11), at a second image capture point where the wheeled platform (11) has been moved before the image capture operation of the plurality of first cameras (13), and generate the image capture timing list, based on the positions of the plurality of image capture target objects, the first image capture points and image capture ranges of the plurality of first cameras,
wherein first cameras (13) are narrow range cameras and the second camera (14) is a wide range camera; and
wherein first image capture points are narrow-range image capture points and the second image capture point is a wide-range image capture point.

2. The control device (20) according to claim 1, wherein
the second camera (14) is configured to capture an image of the image capture plane separately from the plurality of cameras,
the control device (20) further comprising:
an image capture point decision component configured to decide an image capture point for the image capture plane of the second camera (14); and
an image acquisition component configured to move the wheeled platform (11) to the image capture point for acquiring an image by the second camera (14) before the traveling controller controls the traveling of the wheeled platform (11) and acquire images, by the plurality of first cameras (13), necessary for generating the image capture timing list.

3. The control device (20) according to any of claims 1 to 2, further comprising:
an output component configured to output images captured by the plurality of cameras to an image processing device, under control of the image capture controller.

4. The control device (20) according to any of claims 1 to 3, wherein
the plurality of cameras (13) comprises a first camera installation component and a second camera installation component fixed to a top part of the wheeled platform (11).

5. The control device (20) according to claim 4, wherein
the first camera installation component has a plurality of first cameras (13) installed in a line, spaced apart from each other with a predetermined space in a direction perpendicular to a traveling direction of the wheeled platform (11) and with lenses thereof facing a same direction.

6. The control device (20) according to claim 5, wherein
the plurality of first cameras (13) comprise high-resolution narrow-range cameras.

7. The control device (20) according to any of claims 4 to 6, wherein
the second camera installation component comprises one second camera installed at a center part in a direction of a height of the wheeled platform (11) .

8. The control device (20) according to claim 7, wherein
the second camera (14) has a wider angle of view than the plurality of first cameras (13).

9. An image capture system (100), comprising a control device (20) according to any of claims 1 to 8, and
the wheeled platform (11) configured to travel along the image capture plane where the plurality of image capture target objects are arranged, spaced apart from each other in vertical and horizontal directions, with the plurality of cameras installed in a direction perpendicular to a traveling direction of the wheeled platform (11).

10. A method for a control device (20), comprising:
controlling traveling of a wheeled platform (11) traveling along an image capture plane where a plurality of image capture target objects are arranged, spaced apart from each other in vertical and horizontal directions; and
controlling an image capture operation at first image capture points (Q) along the image capture plane, of a plurality of first cameras (13) installed in a direction perpendicular to a traveling direction of the wheeled platform (11), according to an image capture timing list set on a per camera basis, of the plurality of first cameras (13);
specifying positions of the plurality of image capture target objects arranged on the image capture plane, from an image of the image capture plane captured, by a second camera (14) installed on the wheeled platform (11), at a second image capture point where the wheeled platform (11) has been moved before the image capture operation of the plurality of first cameras (13); and
generating the image capture timing list, based on the positions of the plurality of image capture target objects, the first image capture points and image capture ranges of the plurality of first cameras,
wherein first cameras (13) are narrow range cameras and the second camera (14) is a wide range camera; and
wherein first image capture points are narrow-range image capture points and the second image capture point is a wide-range image capture point.

11. The method according to claim 10, further comprising:
capturing an image of the image capture plane separately from the plurality of cameras;
deciding an image capture point for the image capture plane of the second camera (14); and
moving the wheeled platform (11) to the image capture point for acquiring an image by the second camera (14) before
acquiring images, by the plurality of first cameras (13), necessary for generating the image capture timing list.

12. The method according to any of claims 10 to 11, further comprising:
outputting images captured by the plurality of cameras to an image processing device (30).

## Patentansprüche

1. Steuerungsvorrichtung (20), umfassend:
eine Fahrsteuereinheit, die so konfiguriert ist, dass sie Fahren einer fahrbaren Plattform (11) steuert, die entlang einer Bilderfassungsebene fährt, in der eine Vielzahl von Zielobjekten der Bilderfassung angeordnet ist, die voneinander in vertikaler und horizontaler Richtung beabstandet sind;
eine Bilderfassungssteuereinheit, die so konfiguriert ist, dass sie einen Bilderfassungsvorgang an ersten Bilderfassungspunkten (Q) entlang der Bilderfassungsebene von einer Vielzahl von ersten Kameras (13), die in einer Richtung rechtwinklig zu einer Fahrtrichtung der fahrbaren Plattform (11) installiert sind, gemäß einer Bilderfassungs-Zeitvorgabeliste der Vielzahl von ersten Kameras (13), die für jede Kamera einzeln festgelegt ist, steuert; und
eine Listenerzeugungskomponente, die so konfiguriert ist, dass sie Positionen der Vielzahl von Zielobjekten der Bilderfassung, die auf der Bilderfassungsebene angeordnet sind, aus einem Bild der Bilderfassungsebene vorgibt, das von einer zweiten Kamera (14), die auf der fahrbaren Plattform (11) installiert ist, an einem zweiten Bilderfassungspunkt erfasst wurde, zu dem die fahrbare Plattform (11) vor dem Bilderfassungsvorgang der Vielzahl von ersten Kameras (13) hinbewegt wurde, und die Bilderfassungs-Zeitvorgabeliste basierend auf den Positionen der Vielzahl von Zielobjekten der Bilderfassung, den ersten Bilderfassungspunkten und den Bilderfassungsbereichen der Vielzahl von ersten Kameras erzeugt,
wobei erste Kameras (13) Schmalbereichskameras sind und die zweite Kamera (14) eine Weitbereichskamera ist; und
wobei erste Bilderfassungspunkte Schmalbereichs-Bilderfassungspunkte sind und der zweite Bilderfassungspunkt ein Weitbereichs-Bilderfassungspunkt ist.

2. Steuerungsvorrichtung (20) nach Anspruch 1, wobei
die zweite Kamera (14) so konfiguriert ist, dass sie ein Bild der Bilderfassungsebene getrennt von der Vielzahl von Kameras erfasst,
die Steuerungsvorrichtung (20) weiter Folgendes umfasst:
eine Bilderfassungspunkt-Entscheidungskomponente, die so konfiguriert ist, dass sie einen Bilderfassungspunkt für die Bilderfassungsebene der zweiten Kamera (14) entscheidet; und
eine Bildaufnahmekomponente, die so konfiguriert ist, dass sie die fahrbare Plattform (11) zu dem Bilderfassungspunkt bewegt, um ein Bild durch die zweite Kamera (14) aufzunehmen, bevor die Fahrsteuereinheit das Fahren der fahrbaren Plattform (11) steuert, und Bilder durch die Vielzahl von ersten Kameras (13) aufnimmt, die zum Erzeugen der Bilderfassungs-Zeitvorgabeliste notwendig sind.

3. Steuerungsvorrichtung (20) nach einem der Ansprüche 1 bis 2, weiter umfassend:
eine Ausgabekomponente, die so konfiguriert ist, dass sie Bilder, die von der Vielzahl von Kameras erfasst werden, an eine Bildverarbeitungsvorrichtung unter der Steuerung der Bilderfassungssteuereinheit ausgibt.

4. Steuerungsvorrichtung (20) nach einem der Ansprüche 1 bis 3, wobei
die Vielzahl von Kameras (13) eine erste Kamerainstallationskomponente und eine zweite Kamerainstallationskomponente, die an einem oberen Teil der fahrbaren Plattform (11) befestigt ist, umfasst.

5. Steuerungsvorrichtung (20) nach Anspruch 4, wobei
die erste Kamerainstallationskomponente eine Vielzahl von ersten Kameras (13) aufweist, die in einer Linie, voneinander um einen vorbestimmten Abstand in einer Richtung rechtwinklig zu einer Fahrtrichtung der fahrbaren Plattform (11) beabstandet und mit Linsen darauf, die in eine gleiche Richtung zeigen, installiert sind.

6. Steuerungsvorrichtung (20) nach Anspruch 5, wobei
die Vielzahl von ersten Kameras (13) hochauflösende Schmalbereichskameras umfasst.

7. Steuerungsvorrichtung (20) nach einem der Ansprüche 4 bis 6, wobei
die zweite Kamerainstallationskomponente eine zweite Kamera umfasst, die in einem Mittelteil in einer Richtung einer Höhe der fahrbaren Plattform (11) installiert ist.

8. Steuerungsvorrichtung (20) nach Anspruch 7, wobei
die zweite Kamera (14) einen breiteren Blickwinkel aufweist als die Vielzahl von ersten Kameras (13).

9. Bilderfassungssystem (100), umfassend eine Steuerungsvorrichtung (20) nach einem der Ansprüche 1 bis 8, und
die fahrbare Plattform (11), die so konfiguriert ist, dass sie entlang der Bilderfassungsebene fährt, auf der die Vielzahl von Zielobjekten der Bilderfassung angeordnet sind, die voneinander in vertikaler und horizontaler Richtung beabstandet sind, wobei die Vielzahl von Kameras in einer Richtung rechtwinklig zu einer Fahrtrichtung der fahrbaren Plattform (11) installiert ist.

10. Verfahren für eine Steuerungsvorrichtung (20), umfassend:
Steuern von Fahren einer fahrbaren Plattform (11), die entlang einer Bilderfassungsebene fährt, in der eine Vielzahl von Zielobjekten der Bilderfassung angeordnet ist, die voneinander in vertikaler und horizontaler Richtung beabstandet sind; und
Steuern eines Bilderfassungsvorgangs an ersten Bilderfassungspunkten (Q) entlang der Bilderfassungsebene von einer Vielzahl von ersten Kameras (13), die in einer Richtung rechtwinklig zu einer Fahrtrichtung der fahrbaren Plattform (11) installiert sind, gemäß einer Bilderfassungs-Zeitvorgabeliste der Vielzahl von ersten Kameras (13), die für jede Kamera einzeln festgelegt ist;
Vorgeben von Positionen der Vielzahl von Zielobjekten der Bilderfassung, die auf der Bilderfassungsebene angeordnet sind, aus einem Bild der Bilderfassungsebene, die von einer zweiten Kamera (14), die auf der fahrbaren Plattform (11) installiert ist, an einem zweiten Bilderfassungspunkt erfasst wurde, zu dem die fahrbare Plattform (11) vor dem Bilderfassungsvorgang der Vielzahl von ersten Kameras (13) hinbewegt wurde, und
Erzeugen der Bilderfassungs-Zeitvorgabeliste basierend auf den Positionen der Vielzahl von Zielobjekten der Bilderfassung, den ersten Bilderfassungspunkten und Bilderfassungsbereichen der Vielzahl von ersten Kameras,
wobei erste Kameras (13) Schmalbereichskameras sind und die zweite Kamera (14) eine Weitbereichskamera ist; und
wobei erste Bilderfassungspunkte Schmalbereichs-Bilderfassungspunkte sind und der zweite Bilderfassungspunkt ein Weitbereichs-Bilderfassungspunkt ist.

11. Verfahren nach Anspruch 10, weiter umfassend:
Erfassen eines Bilds der Bilderfassungsebene getrennt von der Vielzahl von Kameras;
Entscheiden eines Bilderfassungspunkts für die Bilderfassungsebene der zweiten Kamera (14); und
Bewegen der fahrbaren Plattform (11) zu dem Bilderfassungspunkt zum Aufnehmen eines Bilds durch die zweite Kamera (14) vor
Aufnehmen von Bildern durch die Vielzahl von ersten Kameras (13), die zum Erzeugen der Bilderfassungs-Zeitvorgabeliste notwendig sind.

12. Verfahren nach einem der Ansprüche 10 bis 11, weiter umfassend:
Ausgeben der von der Vielzahl von Kameras erfassten Bilder an eine Bildverarbeitungsvorrichtung (30).

## Revendications

1. Dispositif de commande (20), comprenant :
un dispositif de commande de déplacement configuré pour commander le déplacement d'une plateforme (11) sur roues se déplaçant le long d'un plan de capture d'image où sont agencés une pluralité d'objets cibles de capture d'image, espacés les uns des autres dans des directions verticale et horizontale ;
un dispositif de commande de capture d'image configuré pour commander une opération de capture d'image au niveau de premiers points de capture d'image (Q) le long du plan de capture d'image, d'une pluralité de premières caméras (13) installées dans une direction perpendiculaire à une direction de déplacement de la plateforme (11) sur roues, en fonction d'une liste de moments de capture d'image définie sur une base par caméra, de la pluralité de premières caméras (13) ; et
un composant de génération de liste configuré pour spécifier des positions de la pluralité d'objets cibles de capture d'image agencés sur le plan de capture d'image, à partir d'une image du plan de capture d'image capturée, par une deuxième caméra (14) installée sur la plateforme (11) sur roues, au niveau d'un deuxième point de capture d'image où la plateforme (11) sur roues a été déplacée avant l'opération de capture d'image de la pluralité de premières caméras (13), et générer la liste de moments de capture d'image, sur la base des positions de la pluralité d'objets cibles de capture d'image, des premiers points de capture d'image et de plages de capture d'image de la pluralité de premières caméras,
dans lequel les premières caméras (13) sont des caméras à plage étroite et la deuxième caméra (14) est une caméra à plage large ; et
dans lequel les premiers points de capture d'image sont des points de capture d'image à plage étroite et le deuxième point de capture d'image est un point de capture d'image à plage large.

2. Dispositif de commande (20) selon la revendication 1, dans lequel
la deuxième caméra (14) est configurée pour capturer une image du plan de capture d'image séparément de la pluralité de caméras,
le dispositif de commande (20) comprenant en outre :
un composant de décision de point de capture d'image configuré pour décider d'un point de capture d'image pour le plan de capture d'image de la deuxième caméra (14) ; et
un composant d'acquisition d'image configuré pour déplacer la plateforme (11) sur roues jusqu'au point de capture d'image pour acquérir une image par la deuxième caméra (14) avant que le dispositif de commande de déplacement ne commande le déplacement de la plateforme (11) sur roues et n'acquiert des images, par la pluralité de premières caméras (13), nécessaires pour générer la liste de moments de capture d'image.

3. Dispositif de commande (20) selon l'une quelconque des revendications 1 à 2, comprenant en outre :
un composant de sortie configuré pour délivrer en sortie des images capturées par la pluralité de caméras vers un dispositif de traitement d'image, sous la commande du dispositif de commande de capture d'image.

4. Dispositif de commande (20) selon l'une quelconque des revendications 1 à 3, dans lequel
la pluralité de caméras (13) comprend un premier composant d'installation de caméra et un deuxième composant d'installation de caméra fixés à une partie supérieure de la plateforme (11) sur roues.

5. Dispositif de commande (20) selon la revendication 4, dans lequel
le premier composant d'installation de caméra présente une pluralité de premières caméras (13) installées sur une ligne, espacées les unes des autres avec un espace prédéterminé dans une direction perpendiculaire à une direction de déplacement de la plateforme (11) sur roues et avec des lentilles de celles-ci tournées dans une même direction.

6. Dispositif de commande (20) selon la revendication 5, dans lequel
la pluralité de premières caméras (13) comprennent des caméras à plage étroite haute-résolution.

7. Dispositif de commande (20) selon l'une quelconque des revendications 4 à 6, dans lequel
le deuxième composant d'installation de caméra comprend une deuxième caméra installée au niveau d'une partie centrale dans une direction d'une hauteur de la plateforme (11) sur roues.

8. Dispositif de commande (20) selon la revendication 7, dans lequel
la deuxième caméra (14) présente un angle de vue plus large que celui de la pluralité de premières caméras (13).

9. Système (100) de capture d'image, comprenant un dispositif de commande (20) selon l'une quelconque des revendications 1 à 8, et
la plateforme (11) sur roues configurée pour se déplacer le long du plan de capture d'image où sont agencés la pluralité d'objets cible de capture d'image, espacés les uns des autres dans des directions verticale et horizontale, avec la pluralité de caméras installées dans une direction perpendiculaire à une direction de déplacement de la plateforme (11) sur roues.

10. Procédé pour un dispositif de commande (20), comprenant :
une commande du déplacement d'une plateforme (11) sur roues se déplaçant le long d'un plan de capture d'image où sont agencés une pluralité d'objets cibles de capture d'image, espacés les uns des autres dans des directions verticale et horizontale ; et
une commande d'une opération de capture d'image au niveau de premiers points de capture d'image (Q) le long du plan de capture d'image, d'une pluralité de premières caméras (13) installées dans une direction perpendiculaire à une direction de déplacement de la plateforme (11) sur roues, en fonction d'une liste de moments de capture d'image définie sur une base par caméra, de la pluralité de premières caméras (13) ;
une spécification de positions de la pluralité d'objets cibles de capture d'image agencés sur le plan de capture d'image, à partir d'une image du plan de capture d'image capturée, par une deuxième caméra (14) installée sur la plateforme (11) sur roues, au niveau d'un deuxième point de capture d'image où la plateforme (11) sur roues a été déplacée avant l'opération de capture d'image de la pluralité de premières caméras (13) ; et
une génération de la liste de moments de capture d'image, sur la base des positions de la pluralité d'objets cibles de capture d'image, des premiers points de capture d'image et de plages de capture d'image de la pluralité de premières caméras,
dans lequel les premières caméras (13) sont des caméras à plage étroite et la deuxième caméra (14) est une caméra à plage large ; et
dans lequel les premiers points de capture d'image sont des points de capture d'image à plage étroite et le deuxième point de capture d'image est un point de capture d'image à plage large.

11. Procédé selon la revendication 10, comprenant en outre :
une capture d'une image du plan de capture d'image séparément de la pluralité de caméras ;
une décision d'un point de capture d'image pour le plan de capture d'image de la deuxième caméra (14) ; et
un déplacement de la plateforme (11) sur roues jusqu'au point de capture d'image pour acquérir une image par la deuxième caméra (14) avant
l'acquisition d'images, par la pluralité de premières caméras (13), nécessaires pour générer la liste de moments de capture d'image.

12. Procédé selon l'une quelconque des revendications 10 à 11, comprenant en outre :
une délivrance en sortie d'images capturées par la pluralité de caméras vers un dispositif (30) de traitement d'image.
